# FASCICULE DE BREVET EUROPEEN

(11) **EP 3 210 806 B1**
(45) Date de publication et mention de la délivrance du brevet: **01.05.2024**
(21) Numéro de dépôt: 17155658.2
(22) Date de dépôt: 10.02.2017
(51) Int. Cl.: B60Q 3/80, B60H 1/00, H05B 45/18, H05B 45/28

(54) **SYSTÈME DE CHAUFFAGE ET/OU CLIMATISATION POUR VÉHICULE AUTOMOBILE COMPRENANT UN DISPOSITIF D'ÉCLAIRAGE DE L'HABITACLE**
SYSTEM ZUM HEIZEN UND/ODER KLIMATISIEREN FÜR EIN KRAFTFAHRZEUG AUFWEISEND EINE VORRICHTUNG ZUR BELEUCHTUNG DES INNENRAUMS
HEATING AND/OR AIR CONDITIONING SYSTEM FOR A MOTOR VEHICLE COMPRISING A DEVICE FOR LIGHTING THE PASSENGER COMPARTMENT

(30) Priorité: 22.02.2016 FR 1651408
(43) Date de publication de la demande: 30.08.2017
(73) Titulaire: Valeo Vision, 93012 Bobigny Cedex (FR)
(72) Inventeur: FLEURENCE, Thierry, 57685 Augny (FR); KONIEC, Aymeric, 94350 Villiers Sur Marne (FR)
(74) Mandataire: Valeo Visibility

(56) Documents cités:
- WO-A1-01/60659
- WO-A1-2013/023165
- FR-A1- 3 010 016
- US-A1- 2009 093 206

## Description

La présente invention concerne un système de chauffage et/ou climatisation pour véhicule automobile, comprenant un conduit destiné à faire circuler un flux d'air et un dispositif d'éclairage de l'habitacle d'un véhicule automobile.

Dans le monde de l'automobile, les constructeurs recherchent à la fois des innovations techniques qui visent à améliorer les performances et la sécurité des véhicules, mais aussi des innovations techniques qui apportent des effets à caractère esthétique pour améliorer l'ambiance à bord ou le style du véhicule.

Ainsi, il existe des dispositifs d'éclairage qui ont pour effet de mettre des ambiances particulières dans l'habitacle du véhicule grâce à l'intensité ou la couleur de l'éclairage. D'autre part, certains dispositifs lumineux donnent des indications, par exemple sur le tableau de bord, sur des paramètres du véhicule.

Par exemple, dans le cas de systèmes de chauffage et/ou de climatisation, on peut vouloir donner une indication de la température par des signaux lumineux ayant une couleur spécifique. En effet, un afficheur peut être utilisé pour montrer la température ambiante dans l'habitacle, la couleur du chiffre de la température étant d'une certaine couleur lorsque la température est élevée et d'une couleur différente lorsque la température est basse.

Le document US2007/0046452 montre un dispositif d'éclairage amélioré, qui est disposé dans une conduite de ventilation d'un système de chauffage et/ou de climatisation, le conduit étant doté d'une ouverture débouchant dans l'habitacle du véhicule, de manière ce que le faisceau soit visible par les occupants du véhicule. Grâce à ce dispositif, on obtient un éclairage d'une couleur spécifique, par exemple rouge, qui est diffusée lorsque la température du conduit dépasse une valeur seuil, et une autre couleur spécifique, par exemple bleue, lorsque la température du conduit descend en dessous d'une autre valeur seuil.

Cependant, ce dispositif est limité à deux couleurs et à deux valeurs seuil de températures. La perception visuelle de la température fournie par l'éclairage n'est en conséquence pas précise. En effet, on déduit seulement la valeur de la température au moment du changement ou de l'allumage d'une des deux couleurs. Lorsque la température continue de baisser ou d'augmenter, la couleur de l'éclairage correspondant reste la même.

Le document WO 2013/023165 A1 montre un autre système de chauffage et/ou climatisation pour véhicule automobile comprenant un dispositif d'éclairage variable et un capteur de température.

Le but de l'invention est de remédier aux inconvénients de l'art antérieur, et vise à fournir un système de chauffage et/ou climatisation pour véhicule automobile, comprenant un conduit destiné à faire circuler un flux d'air et un dispositif d'éclairage capable de faire varier l'éclairage en fonction d'une multitude de températures mesurées afin qu'un observateur ressente visuellement la différence de température, même lorsque la différence varie peu.

Pour cela, l'invention se rapporte à un système de chauffage et/ou climatisation pour véhicule automobile comprenant les caractéristiques de la revendication 1.

Ainsi, on peut faire varier l'éclairage du faisceau lumineux de manière à obtenir, par exemple, une couleur ou une intensité différente pour une multitude de températures mesurées distinctes. L'éclairage perçu indique de cette manière la température ambiante à une personne qui se trouve dans l'habitacle.

Le dispositif est utilisé dans un conduit d'air de ventilation d'un système de chauffage et/ou de climatisation d'un véhicule, de sorte que l'éclairage sorte du conduit pour indiquer, grâce à un éclairage spécifique, la température de l'air qui circule à l'intérieur du conduit et qui est destiné à l'habitacle.

Selon différents modes de réalisation de l'invention, qui pourront être pris ensemble ou séparément :
- la ou les caractéristiques variables peuvent être notamment la couleur, l'intensité ou la modulation d'intensité du faisceau lumineux,
- les moyens d'émission de lumière sont configurés pour générer au moins un premier faisceau lumineux d'une première longueur d'onde et un deuxième faisceau lumineux d'une deuxième longueur d'onde, les moyens de commande étant configurés pour combiner l'émission des premier et deuxième faisceaux lumineux en faisant varier leur intensité respective de manière à modifier l'éclairage,
- au moins l'un parmi les moyens d'émission de lumière et les moyens de commande est agencé avec les moyens de mesure de la température ambiante sur un même support de circuit intégré, afin de disposer d'un module compact facile à installer, par exemple dans un véhicule automobile,
- les moyens d'émission de lumière et les moyens de commande sont agencés avec les moyens de mesure de la température ambiante sur un même support de circuit intégré,
- les moyens d'émission de lumière comprennent une première source de lumière configurée pour émettre la première longueur d'onde et une deuxième source de lumière configurée pour émettre la deuxième longueur d'onde,
- la première source est une puce à semi-conducteur émettrice de lumière,
- la deuxième source de lumière est une puce à semi-conducteur émettrice de lumière,
- la ou les puces à semi-conducteur émettrices de lumière sont des diodes électroluminescentes,
- les moyens d'émission de lumière peuvent comprendre une unique source de lumière, notamment une unique puce à semi-conducteur émettrice de lumière,
- la première longueur d'onde est différente de la deuxième longueur d'onde, la première longueur d'onde correspondant à une première couleur et la deuxième longueur d'onde correspondant à une deuxième couleur,
- les moyens d'émission de lumière comprennent une troisième source de lumière, notamment une troisième puce à semi-conducteur émettrice de lumière, configurée pour émettre une troisième longueur d'onde correspondant à une troisième couleur,
- les moyens d'émission de lumière comportent une diode électroluminescente de type RVB, qui comprend les première, deuxième et troisième puces,
- les moyens de mesure comportent une thermistance dont la résistance varie en fonction de la température,
- la thermistance présente un coefficient de température positif,
- la thermistance présente un coefficient de température négatif,
- les moyens de commande comprennent une unité centrale de traitement,
- les moyens de mesure comportent une thermistance dont la résistance varie en fonction de la température, du type NTC,
- les moyens de commande comprennent une unité centrale de traitement, de type CPU,
- les moyens de commande sont configurés pour faire varier l'intensité lumineuse des moyens d'émission de lumière,
- le dispositif comporte un boîtier, les moyens d'émission de lumière, les moyens de mesure et les moyens de commande étant disposés ensemble dans le boîtier,
- la variation de la caractéristique variable en fonction de la température ambiante est fonction exclusivement de la température mesurée par les moyens de mesures,
- le dispositif peut comporter un unique connecteur destiné à l'alimentation électrique du dispositif.

Le dispositif est de préférence agencé à proximité de l'ouverture.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique, un dispositif d'éclairage à éclairage variable,
- la figure 2 illustre de façon schématique, un système de chauffage et/ou de climatisation d'un véhicule automobile muni d'un dispositif d'éclairage à éclairage variable.

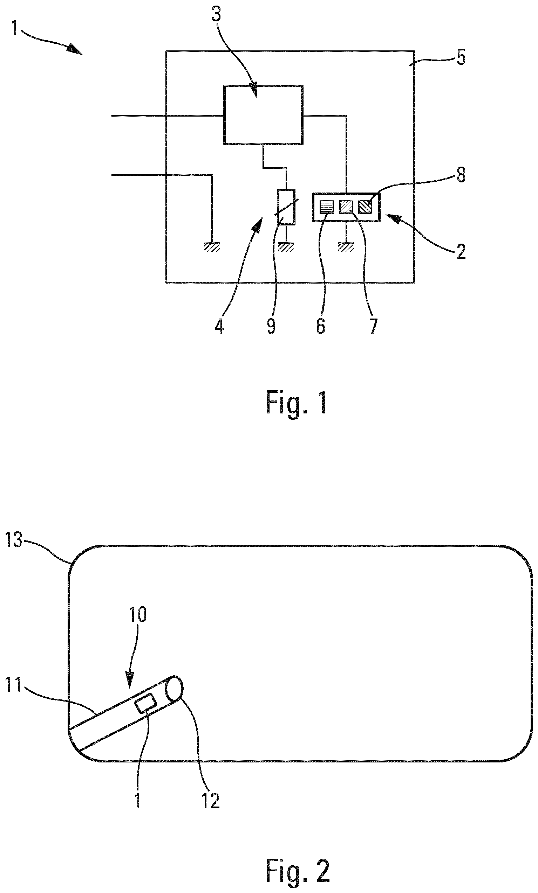

Comme illustré à la figure 1, le dispositif d'éclairage à éclairage variable 1 d'un habitacle de véhicule automobile, comprend des moyens d'émission de lumière variable 2, des moyens de mesure 4 de la température ambiante de l'habitacle du véhicule et des moyens de commande 3 des moyens d'émission de lumière variable 2, qui sont agencés ici sur un même support de circuit intégré, de type PCB (pour «Printed Circuit Board » en anglais). Le dispositif 1 comporte par exemple un boîtier (non représenté sur la figure), les moyens d'émission de lumière 2, les moyens de mesure 4 et les moyens de commande 3 étant disposés ensemble dans le boîtier. Le dispositif 1 peut comporter un unique connecteur destiné à l'alimentation électrique du dispositif 1.

Les moyens d'émission de lumière variable 2 sont aptes à générer sélectivement un faisceau lumineux présentant au moins une caractéristique variable. La ou les caractéristiques variables peuvent être notamment la couleur, l'intensité ou la modulation d'intensité du faisceau lumineux.

Les moyens d'émission de lumière 2 comprennent, de préférence, une première source lumineuse 6 configurée pour émettre un premier faisceau lumineux d'une première longueur d'onde, une deuxième source lumineuse 7 configurée pour émettre un deuxième faisceau lumineux d'une deuxième longueur d'onde, et une troisième source lumineuse 8 configurée pour émettre un troisième faisceau lumineux d'une troisième longueur d'onde. Les trois longueurs d'onde sont avantageusement différentes l'une de l'autre. On utilise comme sources 6, 7, 8, de préférence, des puces à semi-conducteur émettrices de lumière, notamment des diodes électroluminescentes. Ici, la première source 6 est émettrice d'un faisceau rouge, la deuxième source 7 est émettrice d'un faisceau vert et la troisième source 8 est émettrice d'un faisceau bleu pour former une diode électroluminescente de type RGB (pour « Red Green Blue » en anglais) ou RVB (pour rouge, vert, bleu en français), et qui comprend les première, deuxième et troisième puces, Une telle diode permet de générer un éclairage dans sensiblement toutes les couleurs visibles.

Les moyens de commande 3 des moyens d'émission de lumière comprennent ici une unité centrale de traitement, de type CPU (pour « Central Processing Unit » en anglais). Pour fonctionner, les moyens de commande 3 sont reliés à une source d'alimentation électrique agencée en dehors du dispositif 1.

Les moyens de commande 3 sont reliés individuellement à chaque diode 6, 7, 8 de les moyens d'émission de lumière 8 de manière à pouvoir les actionner séparément. Les moyens de commande 3 peuvent ainsi combiner les premier, deuxième et troisième faisceaux lumineux en faisant varier leur intensité respective. Le mélange des trois longueurs d'onde des trois faisceaux permet par conséquent de modifier la couleur de l'éclairage généré par le dispositif 1. Un élément d'éclairage de type RGB peut générer sensiblement toutes les couleurs du spectre visible.

Selon l'invention, les moyens de commande 3 sont configurés pour contrôler l'émission des faisceaux lumineux en faisant varier ladite caractéristique variable en fonction de la température ambiante mesurée par les moyens de mesure. Ici on modifie la couleur de l'éclairage en fonction de la température ambiante, en faisant varier l'intensité de chacun des faisceaux lumineux. La température ambiante est ici la température de l'environnement du support de circuit intégré 5. Autrement dit, il s'agit de la température de l'air qui est autour de la plaquette / support de circuit intégré 5. A cette fin, les moyens de commande 3 sont reliés aux moyens de mesure 4 de la température afin de déterminer la couleur que les moyens d'émission de lumière 2 va générer.

Ainsi, la variation de la caractéristique variable en fonction de la température ambiante est fonction exclusivement de la température mesurée par les moyens de mesures. Le dispositif 1 est notamment dépourvu d'interface d'entrée/sortie de données, en particulier de données relatives à une température ambiante de l'habitacle, par exemple acquises par des moyens de mesures externes.

Les moyens de mesure 4 comportent ici une thermistance 9 dont la résistance varie en fonction de la température ambiante, et qui est de préférence à coefficient de température négatif, de type NTC (pour Négative Température coefficient » en anglais). Ainsi, les moyens de commande 3 calculent la température ambiante grâce à la valeur de la résistance de la thermistance 9. En variante de réalisation, la thermistance peut présenter un coefficient de température positif.

Les moyens de commande 3 sont programmés pour commander une couleur spécifique de l'éclairage généré par les moyens d'émission de lumière 2 en fonction d'une multitude de températures mesurées différentes. Les moyens de commande 3 sont, de préférence, programmés pour commander des couleurs d'éclairage sur un large spectre de la lumière visible par l'œil humain. De préférence encore, les moyens de commande 3 sont configurés pour ordonner des couleurs d'éclairage, qui peuvent avoir n'importe quelle couleur du spectre visible de l'œil humain. Chaque couleur spécifique est en outre différente des autres couleurs spécifiques correspondant à d'autres valeurs de température mesurées. Ainsi, on peut déduire la température ambiante de la couleur de l'éclairage généré par les moyens d'émission de lumière 2.

Les moyens de commande 3 sont en outre configurés pour qu'une couleur spécifique corresponde à un intervalle continu de valeur de températures mesurées. Autrement dit, il existe un écart de valeur autour d'une température donnée, sur lequel la couleur spécifique reste la même. La couleur change seulement lorsque la valeur de la température a dépassé la valeur de cet écart, c'est-à-dire qu'elle n'est plus dans cet intervalle. On peut par exemple avoir un écart de 0.5°C entre chaque changement de couleur.

La variation de la couleur du faisceau d'éclairage peut par exemple être sensiblement continue et/ou progressive sur le spectre de la lumière visible pour passer de couleurs, dite « froides », telles le bleu ou le vert, pour des températures basses, à des couleurs dites « chaudes », telles le rouge ou le jaune, pour des températures élevées.

Dans un deuxième mode de réalisation, les moyens de commande sont configurés pour faire seulement varier l'intensité lumineuse de l'éclairage des moyens d'émission de lumière en fonction de la température. Autrement dit, le dispositif ne modifie pas la couleur mais l'intensité de l'éclairage en fonction de la température.

Dans un troisième mode de réalisation, les moyens de commande sont configurés pour faire varier l'intensité lumineuse et la couleur de l'éclairage des moyens d'émission de lumière en fonction de la température. La variation de la couleur et de l'intensité peut-être simultanée ou consécutive, selon la configuration des moyens de commande.

Sur la figure 2, le dispositif d'éclairage 1 à éclairage variable décrit précédemment est agencé dans un système de ventilation de véhicule automobile, qui est un circuit de chauffage et/ou de climatisation 10. Le dispositif 1 est disposé de sorte que les moyens de mesure 4 puissent mesurer la température de l'air issu du système de chauffage et/ou de climatisation, Le système de chauffage et/ou de climatisation 10 comprend un conduit d'amenée 11 d'un flux d'air qui débouche dans l'habitacle 13 du véhicule par une ouverture 12 destinée à la sortie du flux d'air vers l'habitacle. Le dispositif d'éclairage 1 est disposé dans le conduit 11 de sorte que les moyens de mesure soient aptes à mesurer la température du flux d'air circulant dans le conduit. Le dispositif d'éclairage est de préférence agencé à proximité de l'ouverture 12 du conduit pour que les faisceaux de lumière puissent passer par ladite ouverture 12 de manière à être émis vers l'habitacle 13 du véhicule. Le dispositif 1 est agencé pour que les faisceaux de lumière puissent être émis dans l'habitacle 13 à travers l'ouverture 12.

Le système de chauffage et/ou de climatisation comprend en outre un circuit de chauffage et/ou de climatisation, non représenté sur les figures, qui permet d'amener un flux d'air dans le conduit à la température sélectionnée. Le dispositif d'éclairage 1 est agencé de manière à ce que les moyens de mesure soient sensiblement dans le flux d'air et puisse mesurer sa température.

Grâce à l'invention, le dispositif 1 génère un éclairage dont la couleur varie en fonction de la température du flux d'air circulant dans le conduit 11. Le ou les occupants du véhicule observent ainsi un éclairage d'une couleur spécifique pour une multitude de températures du flux d'air différentes circulant dans le conduit 11. Par conséquent, cela permet de ressentir visuellement la température générée par le système de chauffage et/ou de climatisation, et d'avoir une ambiance particulière lorsque cette température est sélectionnée par l'utilisateur pour le système de chauffage et/ou de climatisation.

Les couleurs sont par exemple distribuées pour des valeurs de température allant de 10°C à 35°C. Une couleur particulière est par exemple générée sur un intervalle de température de l'ordre de 0.5°C autour d'une température fixe, voire de 0.2 °C. L'intervalle peut être plus grand ou plus petit, selon les capacités des moyens de commande et du degré de variation de l'éclairage que l'on souhaite.

En outre, comme les éléments du dispositif sont agencés sur un même support de circuit intégré, on évite d'avoir recours à des capteurs de température supplémentaires agencés dans le système de chauffage et/ou de climatisation.

## Revendications

1. Système de chauffage et/ou climatisation pour véhicule automobile, comprenant un conduit (11) destiné à faire circuler un flux d'air et un dispositif d'éclairage à éclairage variable (1) de l'habitacle d'un véhicule automobile, ledit dispositif comprenant des moyens d'émission de lumière variable (2) aptes à générer sélectivement un faisceau lumineux présentant au moins une caractéristique variable, des moyens de mesure (4) de la température ambiante de l'habitacle du véhicule, et des moyens de commande (3) desdits moyens d'émissions de lumière variable (2), lesdits moyens de commande (3) étant configurés pour contrôler l'émission dudit faisceaux lumineux en faisant varier ladite caractéristique variable des moyens d'émission de lumière (2) en fonction de la température ambiante mesurée par les moyens de mesure (4), le dispositif étant dépourvu d'interface d'entrée/sortie de données, en particulier de données relatives à une température ambiante de l'habitacle, par exemple acquises par des moyens de mesures externes,
**caractérisé en ce que** le dispositif (1) est disposé dans le conduit de sorte que les moyens de mesure (4) puissent mesurer la température de l'air circulant dans le conduit et issu du système de chauffage et/ou de climatisation,
le conduit (11) comprenant une ouverture (12) destinée à la sortie du flux d'air dans l'habitacle (13) du véhicule, le dispositif (1) étant agencé, par exemple à proximité de l'ouverture (12), pour que les faisceaux de lumière puissent être émis vers l'habitacle (13), par ladite ouverture (12).

2. Système de chauffage et/ou climatisation selon la revendication 1, dans lequel au moins l'un parmi les moyens d'émission de lumière (2) et les moyens de commande (3) est agencé avec les moyens de mesure (4) de la température ambiante sur un même support de circuit intégré (5), de type PCB.

3. Système de chauffage et/ou climatisation selon la revendication 1 ou 2, dans lequel les moyens d'émission de lumière (2) sont configurés pour générer au moins un premier faisceau lumineux d'une première longueur d'onde et un deuxième faisceau lumineux d'une deuxième longueur d'onde, les moyens de commande (3) étant configurés pour combiner l'émission des premier et deuxième faisceaux lumineux en faisant varier leur intensité respective de manière à modifier l'éclairage,

4. Système de chauffage et/ou climatisation selon la revendication 3, dans lequel la première longueur d'onde est différente de la deuxième longueur d'onde, la première longueur d'onde correspondant à une première couleur et la deuxième longueur d'onde correspondant à une deuxième couleur.

5. Système de chauffage et/ou climatisation selon la revendication 3 ou 4, dans lequel les moyens d'émission de lumière (2) comprennent une première source de lumière (6), notamment une première puce à semi-conducteur émettrice de lumière, configurée pour émettre la première longueur d'onde et une deuxième source de lumière (7), notamment une puce à semi-conducteur émettrice de lumière configurée pour émettre la deuxième longueur d'onde.

6. Système de chauffage et/ou climatisation selon la revendication 5, dans lequel les moyens d'émission de lumière (2) comprennent une troisième source de lumière (8), notamment une troisième puce à semi-conducteur émettrice de lumière configurée pour émettre une troisième longueur d'onde correspondant à une troisième couleur.

7. Système de chauffage et/ou climatisation selon l'une quelconque des revendications précédentes, dans lequel les moyens de mesure (4) comportent une thermistance (9) dont la résistance varie en fonction de la température.

8. Système de chauffage et/ou climatisation selon l'une quelconque des revendications précédentes, dans lequel les moyens de commande (3) comprennent une unité centrale de traitement.

## Patentansprüche

1. Heizungs- und/oder Klimatisierungssystem für ein Kraftfahrzeug, umfassend einen Kanal (11), der dazu bestimmt ist, einen Luftstrom zirkulieren zu lassen, und eine Beleuchtungsvorrichtung mit variabler Beleuchtung (1) des Innenraums eines Kraftfahrzeugs, wobei die Vorrichtung Mittel zum Emittieren von variablem Licht (2), die geeignet sind, selektiv einen Lichtstrahl zu erzeugen, der mindestens ein variables Merkmal aufweist, Mittel zum Messen (4) der Raumtemperatur des Innenraums des Fahrzeugs und Mittel zum Steuern (3) der Mittel zum Emittieren von variablem Licht (2) umfasst, wobei die Mittel zum Steuern (3) dazu ausgestaltet sind, das Emittieren des Lichtstrahls zu kontrollieren, indem sie das variable Merkmal der Mittel zum Emittieren von Licht (2) in Abhängigkeit von der von den Mitteln zum Messen (4) gemessenen Raumtemperatur variieren lassen, wobei die Vorrichtung keine Schnittstelle zur Eingabe/Ausgabe von Daten aufweist, insbesondere von Daten bezüglich einer Raumtemperatur des Innenraums, die beispielsweise von externen Messmitteln erfasst werden,
**dadurch gekennzeichnet, dass** die Vorrichtung (1) in dem Kanal so angeordnet ist, dass die Mittel zum Messen (4) die Temperatur der in dem Kanal zirkulierenden und aus dem Heizungs- und/oder Klimatisierungssystem hervorgehenden Luft messen können,
wobei der Kanal (11) eine Öffnung (12) umfasst, die zum Austreten des Luftstroms in den Innenraum (13) des Fahrzeugs bestimmt ist, wobei die Vorrichtung (1) zum Beispiel in der Nähe der Öffnung (12) angeordnet ist, damit die Lichtstrahlen durch die Öffnung (12) zum Innenraum (13) hin emittiert werden können.

2. Heizungs- und/oder Klimatisierungssystem nach Anspruch 1, bei dem mindestens eines unter den Mitteln zum Emittieren von Licht (2) und den Mitteln zum Steuern (3) mit den Mitteln zum Messen (4) der Raumtemperatur auf einem selben Träger einer integrierten Schaltung (5) vom Typ PCB angeordnet ist.

3. Heizungs- und/oder Klimatisierungssystem nach Anspruch 1 oder 2, bei dem die Mittel zum Emittieren von Licht (2) dazu ausgestaltet sind, mindestens einen ersten Lichtstrahl mit einer ersten Wellenlänge und einen zweiten Lichtstrahl mit einer zweiten Wellenlänge zu erzeugen, wobei die Mittel zum Steuern (3) dazu ausgestaltet sind, das Emittieren der ersten und zweiten Lichtstrahlen zu kombinieren, indem ihre jeweilige Intensität so variiert wird, dass die Beleuchtung modifiziert wird.

4. Heizungs- und/oder Klimatisierungssystem nach Anspruch 3, bei dem die erste Wellenlänge von der zweiten Wellenlänge verschieden ist, wobei die erste Wellenlänge einer ersten Farbe entspricht und wobei die zweite Wellenlänge einer zweiten Farbe entspricht.

5. Heizungs- und/oder Klimatisierungssystem nach Anspruch 3 oder 4, bei dem die Mittel zum Emittieren von Licht (2) eine erste Lichtquelle (6) umfassen, insbesondere einen ersten lichtemittierenden Halbleiterchip, der dazu ausgestaltet ist, die erste Wellenlänge zu emittieren, und eine zweite Lichtquelle (7), insbesondere einen lichtemittierenden Halbleiterchip, der dazu ausgestaltet ist, die zweite Wellenlänge zu emittieren.

6. Heizungs- und/oder Klimatisierungssystem nach Anspruch 5, bei dem die Mittel zum Emittieren von Licht (2) eine dritte Lichtquelle (8) umfassen, insbesondere einen dritten lichtemittierenden Halbleiterchip, der dazu ausgestaltet ist, eine dritte Wellenlänge zu emittieren, die einer dritten Farbe entspricht.

7. Heizungs- und/oder Klimatisierungssystem nach einem der vorhergehenden Ansprüche, bei dem die Mittel zum Messen (4) einen Thermistor (9) beinhalten, dessen Widerstand in Abhängigkeit von der Temperatur variiert.

8. Heizungs- und/oder Klimatisierungssystem nach einem der vorhergehenden Ansprüche, bei dem die Mittel zum Steuern (3) eine zentrale Verarbeitungseinheit umfassen.

## Claims

1. Heating and/or air conditioning system for a motor vehicle, comprising a duct (11) intended to make an airflow flow and a lighting device (1) with variable lighting of the passenger compartment of a motor vehicle, said device comprising variable light emission means (2) which are able to selectively generate a light beam which has at least one variable characteristic, means (4) for measuring the ambient temperature of the passenger compartment of the vehicle, and means (3) for controlling said variable light emission means (2), said control means (3) being configured to control the emission of said light beam, making said variable characteristic of the light emission means (2) vary as a function of the ambient temperature measured by the measurement means (4), the device having no data input/output interface, in particular for data relating to an ambient temperature of the passenger compartment, which are, for example, acquired by external measurement means,
**characterized in that** the device (1) is arranged in the duct so that the measurement means (4) can measure the temperature of the air flowing through the duct and coming from the heating and/or air conditioning system, the duct (11) comprising an opening (12) intended for the airflow to flow out of into the passenger compartment (13) of the vehicle, the device (1) being arranged, for example in proximity to the opening (12), so that the light beams can be emitted in the direction of the passenger compartment (13) through said opening (12).

2. Heating and/or air conditioning system according to Claim 1, wherein the light emission means (2) and/or the control means (3) are arranged with the means (4) for measuring the ambient temperature on the same integrated circuit carrier (5), of PCB type.

3. Heating and/or air conditioning system according to Claim 1 or 2, wherein the light emission means (2) are configured to generate at least a first light beam with a first wavelength and a second light beam with a second wavelength, the control means (3) being configured to combine the emission of the first and second light beams, making their respective intensities vary so as to modify the lighting.

4. Heating and/or air conditioning system according to Claim 3, wherein the first wavelength is different from the second wavelength, the first wavelength corresponding to a first colour and the second wavelength corresponding to a second colour.

5. Heating and/or air conditioning system according to Claim 3 or 4, wherein the light emission means (2) comprise a first light source (6), notably a first light-emitting semiconductor chip, configured to emit the first wavelength and a second light source (7), notably a light-emitting semiconductor chip, configured to emit the second wavelength.

6. Heating and/or air conditioning system according to Claim 5, wherein the light emission means (2) comprise a third light source (8), notably a third light-emitting semiconductor chip configured to emit a third wavelength corresponding to a third colour.

7. Heating and/or air conditioning system according to any one of the preceding claims, wherein the measurement means (4) comprise a thermistor (9), the resistance of which varies as a function of temperature.

8. Heating and/or air conditioning system according to any one of the preceding claims, wherein the control means (3) comprise a central processing unit.
